# EUROPÄISCHE PATENTSCHRIFT

(11) **EP 1 280 475 B1**
(45) Veröffentlichungstag und Bekanntmachung des Hinweises auf die Patenterteilung: **22.09.2004**
(21) Anmeldenummer: 01933815.1
(22) Anmeldetag: 07.04.2001
(51) Int. Cl.: A61C 13/00, A61C 5/10, C25D 1/14

(54) **VERFAHREN ZUR HERSTELLUNG VOLLKERAMISCHER GERÜSTEN IN DER ZAHNTECHNIK, INSBESONDERE AUS ALUMINA**
METHOD FOR PRODUCING FULL CERAMIC SUBSTRUCTURES, ESPECIALLY CONSISTING OF ALUMINA, IN DENTISTRY
PROCEDE DE PRODUCTION DE SOUS-STRUCTURES EN CERAMIQUE PLEINE, NOTAMMENT EN ALUMINE, EN TECHNIQUE DENTAIRE

(30) Priorität: 08.05.2000 DE 10021437
(43) Veröffentlichungstag der Anmeldung: 05.02.2003
(73) Patentinhaber: Wolz, Stefan, 55566 Bad Sobernheim (DE)
(72) Erfinder: Wolz, Stefan, 55566 Bad Sobernheim (DE)
(74) Vertreter: Wagner, Jutta, Dr.
(86) Internationale Anmeldenummer: PCT/EP2001/004132
(87) Internationale Veröffentlichungsnummer: WO 2001/085053

(56) Entgegenhaltungen:
- WO-A-99/50480
- DE-C- 19 816 546
- US-A- 1 589 564

## Beschreibung

Aus dem deutschen Patent 196 11 734 ist ein Verfahren zur Herstellung von Inlays, Kronen und Brücken aus Spinell, Alumina, Zirconia oder ähnlichen Materialien bekannt, bei dem auf den Stumpf eines Arbeitsmodelles eine Tiefziehfolie aufgezogen wird, die aufgezogene Folie mit einem Schlicker versehen wird und der auf der vom Arbeitsmodell entnommenen Folie befindliche Schlicker gebrannt wird. Hierbei verbrennt die Folie und das gesinterte Gerüst wird anschließend zur Erhöhung der Festigkeit glasinfiltriert.

Ferner ist aus dem deutschen Patent 198 12 664 ein Verfahren zur Herstellung eines keramischen Gerüstes bekannt, bei dem der Stumpf eines Arbeitsmodelles mit einem Trennmittel überzogen wird, das bei Temperaturen über 45°C flüssig ist und das bei Raumtemperatur eine lippenstiftartige Konsistenz aufweist. Das aufgebrachte Trennmittel wird mit einem Schlicker versehen und nach der Trennung vom Arbeitsmodell ebenfalls gebrannt und glasinfiltriert.

Bei beiden Verfahren kann das Aufbringen des Schlickers auf den Überzug, der aus der Folie oder dem Trennmittel besteht, konventionell mit einem Pinsel erfolgen. Besonders bewährt hat sich bei einer vom Erfinder entwickelten Maschine das mehrmalige Eintauchen des Stumpfes des Arbeitsmodelles in den Schlicker mit dazwischenliegender Trocknung der jeweils aufgebrachten, dünnen Schlickerschichten, die in ihrer Gesamtheit die gewünschte Auftragsstärke ergeben.
Da das fertige Keramikgerüst, z.B. in Form eines Käppchens, eine gleichmäßige Schichtstärke aufweisen sollte, war das nachträgliche Abfräßen des Überschußmaterials in einer CNC-Maschine (vgl. deutsche Patent 198 16 546) notwendig.

Aus der WO 99/50480 ist bereits ein elektrophoretisches Verfahren bekannt, das den Merkmalen des Oberbegriffes des Anspruchs 1 entspricht.
Bei diesem Verfahren wird jedoch kein in der Zahntechnik üblicher wäßriger Schlicker verwendet, sondern es wird als Dispersionsmittel ein polares Lösungsmittel eingesetzt, wobei Wasser als Lösungsmittel expressis verbis ausgeschlossen wird, da die Bildung von Wasserstoffbläschen an der Kathode befürchtet wird, was auf die Dichte und Gleichmäßigkeit der Schicht einen negativen Einfluß hätte. Bei diesem Verfahren wird mit Spannungen über 50 V gearbeitet.

Es ist daher Aufgabe der im Anspruch 1 angegebenen Erfindung, das Auftragen des Schlickers so vorzunehmen, daß mit dem Schlickerauftrag bereits die gewünschte gleichmäßige Schichtstärke erzielt wird.

Diese Aufgabe wird mit den kennzeichnenden Merkmalen des Anspruchs 1 gelöst.

Vorteilhafte Ausführungsformen der Erfindung sind in den Unteransprüchen beschrieben.

Die Herstellung von Goldkäppchen durch galvanischen Niederschlag von Gold aus einem Goldbad ( siehe z.B. DE-A-38 05 627 ) ist zwar schon bekannter Stand der Technik. Hierbei handelt es sich jedoch um ein echtes galvanisches Verfahren, bei dem das Gold in gelöster, komplexierter Form vorliegt, das durch Anlegen einer Gleichspannung ausfällt. Die so hergestellten Käppchen haben zwar eine gute Formtreue, sind aber nicht. ausreichend stabil im Vergleich zu gegossenen Käppchen. Im übrigen ist dieses Verfahren zu teuer, um sich im größeren Ausmaß durchsetzen zu können. Noch nachteiliger ist, daß mit diesem Verfahren keine Keramikkäppchen hergestellt werden können, die für die Herstellung eines biokompatibelen Zahnersatzes unabdingbar sind.

Im Gegensatz zum Stand der Technik handelt es sich bei dem erfindungsgemäßen Verfahren nicht um ein galvanisches Verfahren, da das Material, z.B. Alumina, nicht durch elektrischen Strom aus einer Lösung ausgefällt wird, da Alumina absolut inert ist.
Es wird angenommen, daß das gefundene Verfahren auf einem elektrophoretischen Effekt beruht. Der Erfinder möchte sich aber nicht auf eine bestimmte Theorie festlegen lassen. Tatsache ist jedoch, daß durch Anlegen einer Gleichspannung zwischen herkömmlichen Schlicker und einer leitfähigen Oberfläche sich der Feststoff des Schlickers als gleichmäßige Schicht niederschlägt. Vermutlich sind hierfür die Säurezusätze des Schlickers verantwortlich, die den Materialtransport unterstützen oder verursachen.

Aus der DE-A-27 05 770 ist auch die Anwendung eines elektrophoretischen Verfahrens zur Aufbringung eines Opakers auf metallische Gerüste, insbesondere Edelmetallgerüste bekannt. Die tragenden Teile (Gerüst, Dentinund Schneidmasse) werden bei diesem Verfahren mit herkömmlichen Verfahren hergestellt. Im Gegensatz zur vorliegenden Erfindung kann nach der DE-A-27 05 770 kein vollkeramischer Zahnersatz hergestellt werden.

Das erfindungsgemäße Verfahren wird anhand eines Beispiels noch näher erläutert.

Ein Schlicker wird durch Mischen einer Anmischflüssigkeit, eines Additives und eines Aluminapulvers gemäß Vorschrift des bekannten InCeram-Verfahrens (eingetragenes Warenzeichen der Firma VITA) hergestellt. Der Stumpf eines Arbeitsmodelles wird mit einem Lippenstiftmaterial (Labello,eingetragenes Warenzeichen der Firma Beiersdorf AG) überzogen, indem das durch Erhitzen auf über 45°C verflüssigte Trennmittel mit einem Pinsel aufgetragen wird. Das Trennmittel ist mit Titandioxid weiß eingefärbt, um eine Laserabtastung der Kontur zu ermöglichen.
Nach Erkalten und Verfestigen des Überzuges wird ein sog. Silberlack auf diesen Überzug aufgetragen. Silberlacke sind in der Dentalpraxis bekannt und dienen vor allem auch als Reparaturimaterial für Leiterplatten. Durch Anlegen einer Gleichspannung von 13,6V zwischen Schlickermasse und leitfähig gemachtem Überzug des Stumpfes schlägt sich bei einer Stromstärke von 8A innerhalb von 5min eine Aluminaschicht von ca. 0.5mm nieder. Der Pluspol wird hierbei am Stumpf angelegt. Nach der Trocknung in einem Trockenschrank bei Temperaturen über 100°C wird das Aluminakäppchen vom Arbeitstumpf abgehoben und anschließend bei 1140°C gesintert. Das Trennmittel wird, soweit es nach dem Trocken noch vorhanden ist, beim Sintern restlos verbrannt. Als letzter Schritt erfolgt die Gläsinfiltration zu Erhöhung der Festigkeit der Keramikstruktur des Käppchens.

Aus vorstehenden Ausführungen ist ersichtlich, daß mit dem erfindungsgemäßen Verfahren eine beachtliche Zeiterspamis einhergeht, da auf das Nacharbeiten der Aluminaschicht verzichtet werden kann.

Der Überzug ( Folie oder Trennmittel ) kann durch verschiedene Verfahren leitfähig gemacht werden. Es kann der Masse ein leitfähiges Material ( z.B. Graphitpulver oder Metallpulver ) beigemischt werden. Wirksamer scheint jedoch die Beschichtung des Überzuges mit einer leitfähigen Schicht zu sein, da sie einen geringeren Widerstand hat und somit einen schnelleren Niederschlag des Keramikmaterials ermöglicht. Diese Beschichtung ist bei der Verwendung einer metallisierten Folie von selbst gegeben. Das Trennmittel kann, wie oben gezeigt, in geschmolzenem Zustand aufgetragen werden. Es ist aber auch möglich, es als Lösung aufzutragen, wobei das Lösungsmittel anschließend abgedampft wird.

## Patentansprüche

1. Verfahren zur Herstellung von vollkeramischen Gerüsten, insbesondere Käppchen aus Alumina, in der Zahntechnik, wobei der Stumpf eines Arbeitsmodelles mit einer Folie oder einem Trennmittel überzogen wird, dieser Überzug elektrisch leitfähig gemacht wird, auf diesen Überzug ein Schlicker aufgebracht wird, indem der überzogene Stumpf in ein Gefäß mit Schlicker getaucht wird und durch Anlegen einer Gleichspannung zwischen dem Gefäß und dem leitfähigen Überzug ein Auftrag des Feststoffes des Schlickers auf dem Stumpf des Arbeitsmodelles erfolgt, und nach Trennung vom Arbeitsmodell der Schlicker getrocknet und zum Gerüst gebrannt wird, das anschließend glasinfiltriert wird.

2. Verfahren nach Anspruch 1, **dadurch gekennzeichnet, dass** der Überzug aus Folie oder Trennmittel mit einer leitfähigen Schicht beschichtet wird:

3. Verfahren nach Anspruch 1, **dadurch gekennzeichnet, dass** bei Verwendung eines Trennmittels die Leitfähigkeit durch Auftragen eines Silberlackes erfolgt.

4. Verfahren nach Anspruch 1, **dadurch gekennzeichnet, dass** bei Verwendung eines Trennmittels die Leitfähigkeit durch Zumischen eines leitfähigen Materials in das Trennmittel erzielt wird.

5. Verfahren nach Anspruch 1, **dadurch gekennzeichnet, dass** bei Verwendung einer Folie diese Folie metallbeschichtet ist.

## Claims

1. A method for producing full ceramic structures, in particular copings from alumina in dentistry, whereby the stump of a working model is coated with a foil or a release agent, this coating is electrically conductive, a slicker is applied to said coating by dipping the coated stump in a vessel with slicker and the solid matter of the slicker is applied to stump of the working model by applying a dc voltage between the vessel and the conductive coating, and, upon separation from the working model, the slicker, after drying, is baked to the substructure, which is subsequently infiltrated with glass.

2. The method according to claim 1, **characterized in that** the coating from foil or release agent is coated with a conductive layer.

3. The method according to claim 1, **characterized in that** if a release agent is used, the conductivity is produced by applying a silver lacquer.

4. The method according to claim 1, **characterized in that** if a release agent is used, the conductivity is produced by admixing a conductive material to the release agent.

5. The method according to claim 1, **characterized in that** if a foil is used, said foil is coated with metal.

## Revendications

1. Procédé de fabrication de sous-structures en céramique pleine, notamment de capuchons en alumine, en technique dentaire, le chicot d'un modèle mécanique étant revêtu d'un film ou d'un agent de séparation, ce revêtement étant conducteur électrique, une barbotine étant appliquée sur ce revêtement, par immersion du chicot revêtu dans un récipient de barbotine et une application de la matière solide de la barbotine sur le chicot du modèle mécanique étant réalisée par application d'une tension continue entre le récipient et le revêtement conducteur, et après avoir été séparée du modèle mécanique, la barbotine étant séchée et brûlée en une sous-structure, qui est ensuite infiltrée de verre.

2. Procédé selon la revendication 1, **caractérisé en ce que** le revêtement en film ou en agent de séparation est enduit d'une couche conductrice.

3. Procédé selon la revendication 1, **caractérisé en ce que** lors de l'utilisation d'un agent de séparation, la conductibilité est donnée par l'application d'une laque argentine.

4. Procédé selon la revendication 1, **caractérisé en ce que** lors de l'utilisation d'un agent de séparation, la conductibilité est donnée par mélange d'une matière conductrice à l'agent de séparation.

5. Procédé selon la revendication 1, **caractérisé en ce que** lors de l'utilisation d'un film, ce film est revêtu de métal.
